# EUROPEAN PATENT SPECIFICATION

(11) **EP 4 177 648 B1**
(45) Date of publication and mention of the grant of the patent: **02.09.2026**
(21) Application number: 21832252.7
(22) Date of filing: 12.05.2021
(51) Int. Cl.: G02B 6/02, G02B 6/46, H01S 3/10, G02B 6/36

(54) **SECURING STRUCTURE, OPTICAL DEVICE, AND LASER APPARATUS**
BEFESTIGUNGSSTRUKTUR, OPTISCHE VORRICHTUNG UND LASERVORRICHTUNG
STRUCTURE DE FIXATION, DISPOSITIF OPTIQUE ET APPAREIL LASER

(30) Priority: 01.07.2020 JP 2020114282
(43) Date of publication of application: 10.05.2023
(73) Proprietor: Fujikura Ltd., Tokyo 135-8512 (JP)
(72) Inventor: ENDO, Tomohisa, Sakura-shi, Chiba 285-8550 (JP)
(74) Representative: Plasseraud IP
(86) International application number: PCT/JP2021/018038
(87) International publication number: WO 2022/004141

(56) References cited:
- JP-A- 2011 513 774
- JP-A- 2011 525 706
- JP-A- 2019 144 385
- JP-A- H0 511 122
- JP-A- H03 118 505
- JP-A- H1 020 146
- JP-A- H11 109 188
- US-A- 5 367 591
- US-A1- 2007 217 738
- US-A1- 2011 110 625

## Description

### Technical Field

The present invention relates to a securing structure for securing an optical fiber to a support body with use of a resin member. The present invention also relates to an optical device including such a securing structure and relates to a laser apparatus including such an optical device.

### Background Art

A securing structure for securing an optical fiber to a support body with use of a resin member that covers a boundary between a coating-removed section of an optical fiber and a coating section of the optical fiber is widely used. For example, Patent Literature 1 discloses a securing structure for securing an optical fiber to an end portion (equivalent to the above-described support body) with use of a guiding adhesive (equivalent to the above-described resin member) that covers a boundary between a coating-removed section of an optical fiber and a coating section of the optical fiber. Note that the coating section refers to a section where a cladding of the optical fiber is covered with a coating, and the coating-removed section refers to a section where the coating of the cladding is removed and the cladding is uncovered.

### Citation List

### [Patent Literature]

[Patent Literature 1]
   Published Japanese Translation of PCT International Application Tokuhyo No. 2016-533543
[Patent Literature 2] JP 2019 144385 A
[Patent Literature 3] JP H10 20146 A
[Patent Literature 4] US 5 367 591 A
[Patent Literature 5] JP H03 118505 A
[Patent Literature 6] US2011/0110625 A1

### Summary of Invention

### Technical Problem

However, in the conventional securing structure, the light that has leaked, in the coating-removed section, from the cladding of the optical fiber to the resin member may enter the coating in the coating section and cause the coating to generate heat. This may cause a decrease in reliability of the securing structure.

An aspect of the present invention has been made in view of the foregoing problems. It is an object of the aspect of the present invention to achieve a reliable securing structure that reduces heat generation which may be caused in a coating in a case where light that has leaked, in the coating-removed section, from the cladding of the optical fiber to the resin member enters the coating in the coating section. It is an object of another aspect of the present invention to achieve a reliable optical device with use of such a securing structure. It is an object of still another aspect of the present invention to achieve a reliable laser apparatus with use of such an optical device.

### Solution to Problem

A securing structure in accordance with the independent claim 1 includes: one optical fiber; a support body in which a groove for accommodating the optical fiber and another groove intersecting the groove are formed; and a resin member for covering, inside the groove, a boundary between a coating section of the optical fiber and a coating-removed section of the optical fiber and securing the optical fiber to the support body, the resin member being spread inside the another groove partway along the groove. The resin member has a refractive index lower than a refractive index of a cladding of the optical fiber.

An optical device in accordance with an aspect of the present invention includes a securing structure in accordance with an aspect of the present invention.

A laser apparatus in accordance with an aspect of the present invention includes an optical device in accordance with an aspect of the present invention.

### Advantageous Effects of Invention

An aspect of the present invention makes it possible to achieve a reliable securing structure that reduces heat generation which may be caused in a coating in a case where light that has leaked, in the coating-removed section, from the cladding of the optical fiber to the resin member enters the coating in the coating section. Another aspect of the present invention makes it possible to achieve a reliable optical device with use of such a securing structure. Still another aspect of the present invention makes it possible to achieve a reliable laser apparatus with use of such an optical device.

### Brief Description of Drawings

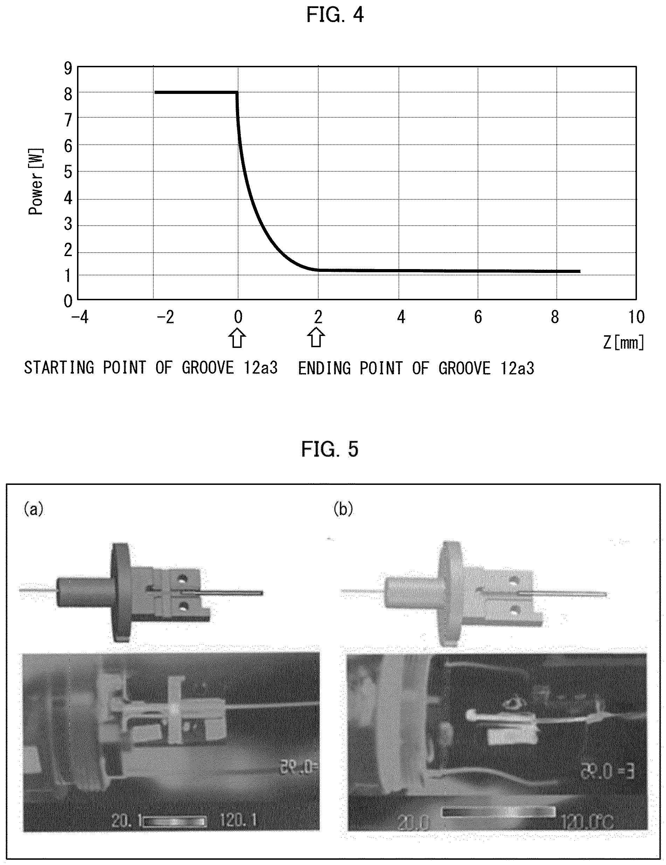

Fig. 1 is a side view illustrating a configuration of an optical device including a securing structure in accordance with an embodiment of the present invention.
Fig. 2 is a cross-sectional view illustrating a section A-A' of the optical device illustrated in Fig. 1.
Fig. 3 is a cross-sectional view illustrating a section B-B' of the optical device illustrated in Fig. 1.
Fig. 4 is a graph showing a measurement result of power of light that propagates in a backward direction inside a groove in the securing structure illustrated in Figs. 1 to 3.
(a) of Fig. 5 is a perspective view of a securing structure in accordance with Example and a view illustrating temperature distribution of the securing structure in accordance with the Example. (b) of Fig. 5 is a perspective view of a securing structure in accordance with Comparative Example and a view illustrating temperature distribution of the securing structure in accordance with the Comparative Example.

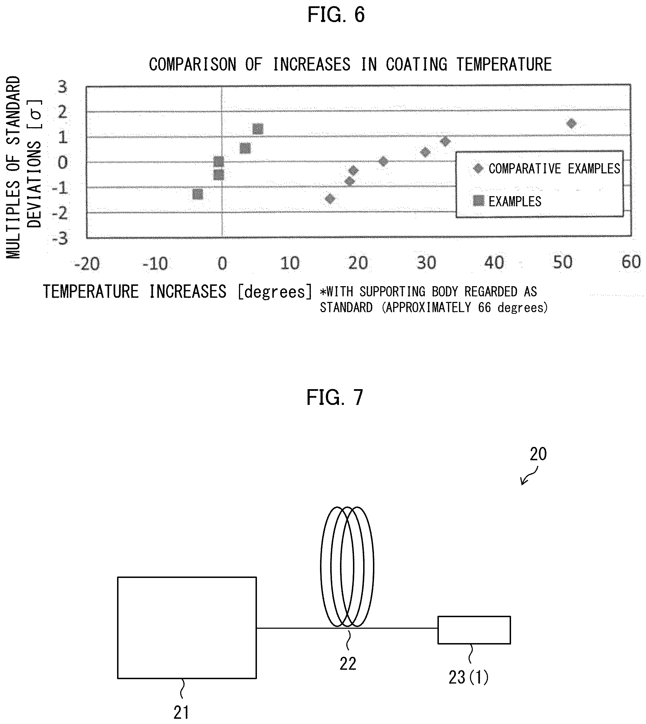

Fig. 6 is a graph showing a correlation between increases in temperatures of coatings of optical fibers and deviations of the increases, with respect to Example of 5 samples and Comparative Example of 7 samples.

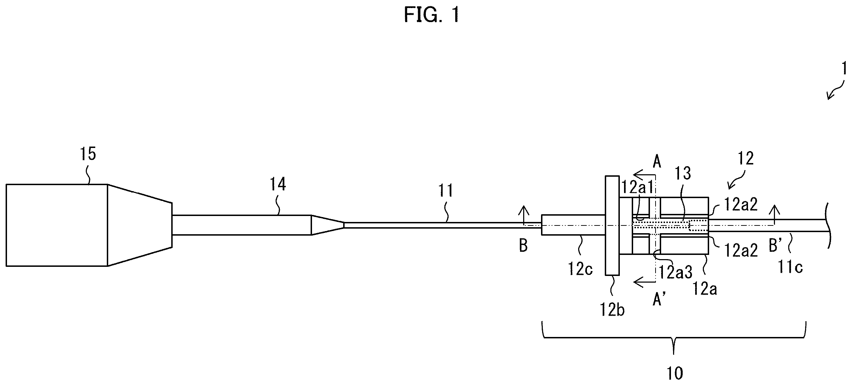

Fig. 7 is a block diagram of a laser apparatus including the optical device illustrated in Fig. 1.

### Description of Embodiments

### (Configuration of Optical Device)

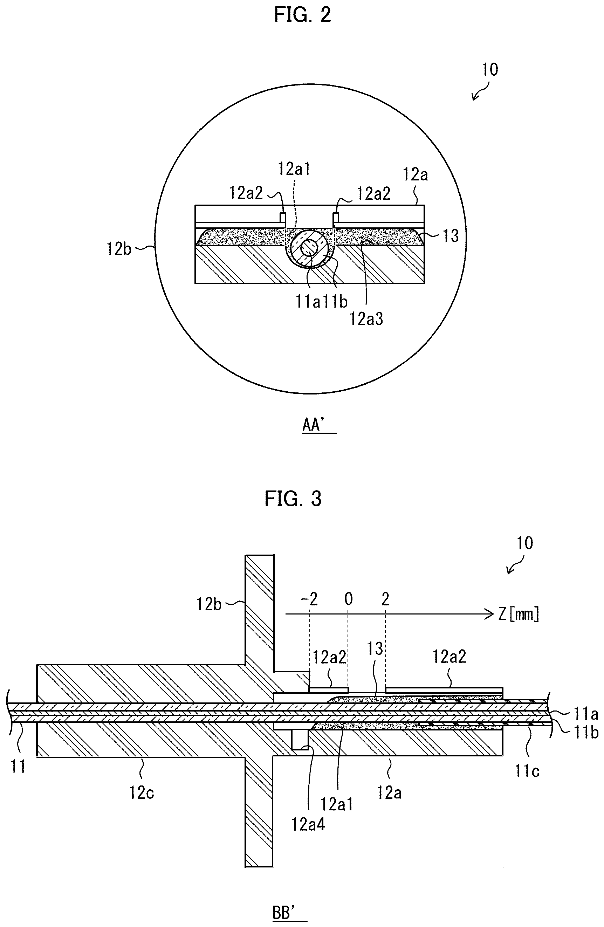

The following will describe an optical device 1 including a securing structure 10 in accordance with an embodiment of the present invention with reference to Figs. 1 to 3. Fig. 1 is a side view illustrating a configuration of the optical device 1. Fig. 2 is a cross-sectional view illustrating a section A-A' of the securing structure 10 (see Fig. 1). Fig. 3 is a cross-sectional view illustrating a section B-B' of the securing structure 10 (see Fig. 1).

The optical device 1 is a device for irradiating a workpiece with laser light. As illustrated in Fig. 1, the optical device 1 includes an optical fiber 11, a support body 12, a resin member 13, a large-diameter fiber 14, and a glass block 15. In the optical device 1, the securing structure 10 is constituted by the optical fiber 11, the support body 12, and the resin member 13. Further, the optical device 1 may include a housing (not illustrated). In this case, the housing accommodates the support body 12, the resin member 13, the large-diameter fiber 14, and the glass block 15, and the optical fiber 11 is drawn into the housing.

The optical fiber 11 is a component for guiding laser light. In the present embodiment, an optical fiber including a core 11a having a circularly columnar shape, a cladding 11b having a cylindrical shape and surrounding the core 11a, and a coating 11c having a cylindrical shape and surrounding the cladding 11b is used as the optical fiber 11. The core 11a and the cladding 11b are made mainly of quartz. The coating 11c is made mainly of resin. The coating 11c is removed in a section including one end of the optical fiber 11. In the optical fiber 11, a "coating section" refers to a section where the cladding 11b is covered with the coating 11c, and a "coating-removed section" refers to a section where the coating 11c is removed and the cladding 11b is uncovered.

The support body 12 is a component for supporting the optical fiber 11 in a linear manner. In the present embodiment, a support body including a flange portion 12b, a base portion 12a which is provided on one side of the flange portion 12b, and a ferrule portion 12c which is provided on the other side of the flange portion 12b is used as the support body 12. The support body 12 is formed in one piece of copper, and a surface of the support body 12 is plated with gold. The base portion 12a is a plate-like portion having a rectangular main surface. On one surface of the base portion 12a, a groove 12a1 crossing this surface lengthwise and ribs 12a2 disposed on both sides of the groove 12a1 and crossing this surface lengthwise are formed. The optical fiber 11 is accommodated inside the groove 12a1, and is inserted into the ferrule portion 12c via a through hole provided in a center of the flange portion 12b. In this case, the optical fiber 11 is disposed such that a boundary between the coating section of the optical fiber 11 and the coating-removed section of the optical fiber 11 is located inside the groove 12a1.

The resin member 13 is a component for securing the optical fiber 11 accommodated in the groove 12a1 to the support body 12. In the present embodiment, a resin member obtained by curing a liquid resin that has been injected into the groove 12a1 is used as the resin member 13. The liquid resin may be a photo-curable resin or a heat-curable resin. In a case where the liquid resin is a photo-curable resin, the liquid resin is cured by the irradiation of the liquid resin with light falling within a specific wavelength band (for example, ultraviolet light). In a case where the liquid resin is a heat-curable resin, the liquid resin is cured by the application of heat to the liquid resin.

Laser light emitted from the optical fiber 11 passes through the large-diameter fiber 14 and the glass block 15 and falls on a workpiece. In the present embodiment, an optical fiber that has a circularly columnar shape and that is tapered down to have a decreased diameter at one end thereof is used as the large-diameter fiber 14, and a glass block that has a circularly columnar shape and that is tapered down to have a decreased diameter at one end thereof is used as the glass block 15. An emission end surface of the optical fiber 11 is fusion-spliced to a smaller diameter-side end surface of the large-diameter fiber 14, and a larger diameter-side end surface of the large-diameter fiber 14 is fused with a smaller diameter-side end surface of the glass block 15.

### (Feature of Securing Structure)

In the optical device 1, the securing structure 10 includes the optical fiber 11, the support body 12, and the resin member 13. As illustrated in Figs. 1 and 3, the groove 12a1 for accommodating the optical fiber 11 is formed in the support body 12. As illustrated in Figs. 1 and 3, inside the groove 12a1, the resin member 13 covers a boundary between a coating section of the optical fiber 11 and a coating-removed section of the optical fiber 11 and secures the optical fiber 11 to the support body 12.

The feature of the securing structure 10 is that the resin member 13 is spread out of the groove 12a1 partway along the groove 12a1. In order to achieve the feature, in the securing structure 10 in accordance with the present embodiment, a groove 12a3 intersecting (in the present embodiment, orthogonal to) the groove 12a1 partway along the groove 12a1 is formed in the support body 12, as illustrated in Figs. 1 and 2. The ribs 12a2 provided on the both sides of the groove 12a1 partly have respective missing parts partway along the groove 12a1, as illustrated in Figs. 1 and 3. This allows a liquid resin injected into the groove 12a1 to go into the groove 12a3 partway along the groove 12a1 when the resin member 13 is formed. Thus, the resin member 13 formed by curing the liquid resin is shaped such that the resin member 13 is spread out of the groove 12a1 partway along the groove 12a1, as illustrated Figs. 1 and 2.

When processing is performed with use of the optical device 1, laser light with which a workpiece is to be irradiated propagates in a forward direction from an optical fiber 11 side to a glass block 15 side, and the light that has been reflected on the workpiece and the like light may propagate in a backward direction from the glass block 15 side to the optical fiber 11 side. In this case, part of the light propagating in the backward direction leaks, in the coating-removed section, from the cladding 11b of the optical fiber 11 into the resin member 13. The light that has leaked, in the coating-removed section, from the cladding 11b of the optical fiber 11 into the resin member 13 may propagate in the resin member 13 formed inside the groove 12a1 and then enter the coating 11c of the optical fiber 11 to cause the coating 11c of the optical fiber 11 to generate heat. In contrast, in the securing structure 10, the resin member 13 is spread out of the groove 12a1 partway along the groove 12a1. This causes part of the light that has leaked, in the coating-removed section, from the cladding 11b of the optical fiber 11 to the resin member 13 to be guided, before entering the coating 11c of the optical fiber 11, to the resin member 13 spread to the outside of the groove 12a1 (specifically, to the groove 12a3). Thus, it is possible to minimize the ratio of the light that enters the coating 11c of the optical fiber 11 in the light that has leaked, in the coating-removed section, from the cladding 11b of the optical fiber 11 to the resin member 13. As a result, it is possible to reduce heat generation which may be caused in the coating 11c of the optical fiber 11 in a case where the light that has leaked, in the coating-removed section, from the cladding 11b of the optical fiber 11 to the resin member 13 enters the coating 11c of the optical fiber 11. Therefore, it is possible to achieve the reliable securing structure 10. As a result, it is possible to achieve the reliable optical device 1.

The resin member 13 has a refractive index lower than the refractive index of the cladding 11b of the optical fiber 11. This makes it possible to reduce the light that leaks, in the coating-removed section, from the cladding 11b of the optical fiber 11 to the resin member 13. Thus, it is possible to further reduce the intensity of the light entering the coating 11c of the optical fiber 11. As a result, it is possible to further reduce heat generation which may be caused in the coating 11c of the optical fiber 11 in a case where the light that has leaked, in the coating-removed section, from the cladding 11b of the optical fiber 11 to the resin member 13 enters the coating 11c of the optical fiber 11.

Further, the groove 12a1 is preferably a U-shaped groove as illustrated in Fig. 2. This makes stress that the optical fiber 11 receives from the resin member 13 formed inside the groove 12a1 close to uniform (axially symmetric). As a result, it is possible to prevent degradation in beam quality which may be caused in a case where the optical fiber 11 receives nonuniform (axially asymmetric) stress.

Further, the groove 12a3 is preferably formed so as to be, as seen in a plan view of the support body 12, linearly symmetric with respect to the groove 12a1, as illustrated in Fig. 1. This makes the stress that the optical fiber 11 receives from the resin member 13 formed inside the grooves 12a1 and 12a3 close to uniform (linearly symmetric). As a result, it is possible to prevent degradation in beam quality which may be caused in a case where the optical fiber 11 receives nonuniform (linearly asymmetric) stress.

Further, it is preferable that a recess 12a4 for regulating the range in which the resin member 13 is spread be formed at a bottom of the groove 12a1, as illustrated in Fig. 3. This makes it possible to prevent the resin member 13 obtained by curing the liquid resin which has been injected into the groove 12a1 at the formation of the resin member 13, overflowed from the recess 12a4, and entered the vicinity of the flange portion 12b from having an unintended shape (that results in the application of unintended stress to the optical fiber 11).

In the present embodiment, the groove 12a1 defines a manner in which the resin member 13 spreads. Thus, forming the groove 12a3 intersecting the groove 12a1 allows the resin member 13 to be spread out of the groove 12a1. However, the present invention is not limited to this. In an example not in accordance with the claimed invention, the ribs 12a2 may define the manner in which the resin member 13 spreads. In this case, only providing the ribs 12a2 partly having missing parts partway along the groove 12a1, without forming the groove 12a3 intersecting the groove 12a1, allows the resin member 13 to be spread out of the groove 12a1.

### (Verification of Effect)

Fig. 4 shows the result of determination, by numerical experiment, of power of the light that, in the securing structure 10, propagates in a backward direction in the resin member 13 formed inside the groove 12a1. Fig. 4 is a graph, along a z-axis illustrated in Fig. 3, showing plots of the power of the light that propagates in a backward direction in the resin member 13 formed inside the groove 12a1. Here, the z-axis is parallel to a light axis of the optical fiber 11. The original point of the z-axis is set at a starting point of the groove 12a3. Note that, in the numerical experiment, it was assumed that the groove 12a3 had a width of 2 mm in a z-axis direction. Note that it was assumed that a refractive index of the cladding 11b of the optical fiber 11 was 1.45, a refractive index of the air was 1, and a refractive index of the resin member 13 was 1.41. In addition, it was assumed that in the section from z=-2 to z=0, the resin member 13 filled in the groove 12a1 with no gap, and in the section from z=0 to z=2, the resin member 13 filled in the grooves 12a1 and 12a3 with no gap.

The graph shown in Fig. 4 reveals the following: in a first section from z=-2 to z=0 in which the resin member 13 is formed only inside the groove 12a1, the power of the light that propagates in a backward direction in the resin member 13 formed inside the groove 12a1 keeps substantially constant; in a second section from z=0 to z=2 in which the resin member 13 is spread out of the groove 12a1, the power of the light that propagates in a backward direction in the resin member 13 formed inside the groove 12a1 is decreased rapidly; and in a third section of z= a value of not less than 2 in which the resin member 13 is formed only inside the groove 12a1, the power of the light that propagates in a backward direction in the resin member 13 formed inside the groove 12a1 keeps substantially constant. The power of the light that, in the third section, propagates in a backward direction in the resin member 13 formed inside the groove 12a1 is approximately one eighth of that of the light that, in the first section, propagates in a backward direction in the resin member 13 formed inside the groove 12a1. This means that the power of light that reaches the coating 11c of the optical fiber 11 is sufficiently low.

(a) of Fig. 5 is a perspective view of a securing structure 10 (Example) and a view illustrating temperature distribution of the securing structure 10 (Example). (b) of Fig. 5 is a perspective view of a securing structure 10 (Comparative Example) that does not include the groove 12a3 so that the resin member 13 is not spread out of the groove 12a1 and a view illustrating temperature distribution of the securing structure 10 (Comparative Example). Both of the temperature distributions are obtained when light propagates in a backward direction in the cladding 11b of the optical fiber 11. As can be seen from the view illustrating the temperature distributions in Fig. 5, in the Comparative Example in which the resin member 13 is not spread out of the groove 12a1, the temperature of the coating 11c of the optical fiber 11 reaches approximately 100°C, whereas in the Example in which the resin member 13 is spread out of the groove 12a1, the temperature of the coating 11c of the optical fiber 11 is suppressed to approximately 40°C. That is, it was confirmed that providing the groove 12a3 and spreading the resin member 13 out of the groove 12a1 could reduce heat generation which was caused in the coating 11c of the optical fiber 11 by the light that had leaked, in the coating-removed section, from the cladding 11b of the optical fiber 11 to the resin member 13.

Fig. 6 is a graph showing a correlation between increases in temperatures of the coatings 11c of the optical fibers 11 and deviations of the increases, with respect to the above-described Example of 5 samples and the above-described Comparative Example of 7 samples. Note that in the graph shown in Fig. 6, the horizontal axis indicates differences between the increases in temperatures of the coatings 11c of the optical fibers 11 and the increases in temperatures of the support bodies 12, and the vertical axis indicates multiples of the standard deviations. As can be seen from the graph shown in Fig. 6, in the Comparative Example, the mean value of the increases in temperatures of the coatings 11c is higher by approximately 30°C than the increase in temperature of the support body 12, whereas in the Example, the mean value of the increases in temperatures of the coatings 11c is approximately equal to the increase in temperature of the support body 12. Further, as can be seen from the graph shown in Fig. 6, in the Comparative Example, variations of the increases in temperatures of the coatings 11c are so large that an extreme increase in temperature which can cause a serious problem in the coating 11c is highly likely to occur, whereas in the Example, variations in the increases in temperatures of the coatings 11c are so small that such an extreme increase in temperature is less likely to occur. That is, it can be seen that the Example are more reliable than the Comparative Example.

### (Laser Apparatus)

The above-described optical device 1 can be used in a laser apparatus for processing. Fig. 7 is a block diagram illustrating a configuration of such a laser apparatus 20.

The laser apparatus 20 includes a laser light source 21, a delivery fiber 22, and an optical device 23. The laser light source 21 is a component for generating laser light. The laser light source 21 may be a solid laser, a liquid laser, a gas laser, or a fiber laser. The delivery fiber 22 is a component for guiding the laser light generated by the laser light source 21. The delivery fiber 22 may be a single-mode fiber or a multimode fiber. The optical device 23 is a component for irradiating a workpiece W with the light guided by the delivery fiber 22. The above-described optical device 1 can be used as the optical device 23 to achieve a reliable laser apparatus 20.

According to the claimed invention, a securing structure includes: one optical fiber; a support body in which a groove for accommodating the optical fiber and another groove intersecting the groove are formed; and a resin member for covering, inside the groove, a boundary between a coating section of the optical fiber and a coating-removed section of the optical fiber and securing the optical fiber to the support body, the resin member being spread inside the another groove partway along the groove. The resin member has a refractive index lower than a refractive index of a cladding of the optical fiber.

The above-described configuration makes light that has leaked, in the coating-removed section, from a cladding of the optical fiber to the resin member less likely to enter a coating of the optical fiber in the coating section. Thus, it is possible to reduce heat generation caused in the coating of the optical fiber as compared with a case where the resin member is formed only inside the groove. As a result, it is possible to achieve a reliable securing structure as compared with the case where the resin member is formed only inside the groove.

The above-described configuration further facilitates spreading the resin member out of the groove partway along the groove in a case where the resin member is formed by curing a liquid resin that has been injected into the groove.

The above-described configuration also makes it possible to further reduce heat generation caused in the coating of the optical fiber.

The another groove of the claimed securing structure may be formed so as to be, in a plan view of the support body, linearly symmetric with respect to the groove.

The above-described configuration makes it possible to prevent degradation in beam quality which may be caused by nonuniform stress applied from the resin member to the optical fiber.

The claimed groove may be a U-shaped groove.

The above-described configuration makes it possible to prevent degradation in beam quality which may be caused by nonuniform stress applied from the resin member to the optical fiber.

The claimed securing structure may include a recess for regulating a range in which the resin member is spread formed at a bottom of the groove.

The above-described configuration makes less likely to occur a situation where a resin member having an unintended shape is formed, and, as a result, unintended stress acts on the optical fiber.

The claimed optical device makes it possible to achieve a more reliable optical device than an optical device including the conventional securing structure.

The claimed laser apparatus makes it possible to achieve a more reliable laser apparatus than a laser apparatus including the conventional optical device.

### (Supplementary note)

The present invention is not limited to the above described embodiments, but is defined solely by the scope of the appended claims.

### Reference Signs List

- 1: Optical device
- 10: Securing structure
- 11: Optical fiber
- 11a: Core
- 11b: Cladding
- 11c: Coating
- 12: Support body
- 12a: Base portion
- 12a1: Groove
- 12a2: Rib
- 12a3: groove
- 12a4: Recess
- 13: Resin member
- 14: Large-diameter fiber
- 15: Glass block
- 20: Laser apparatus
- 21: Laser light source
- 22: Delivery fiber
- 23: Optical device

## Claims

1. A securing structure (10) comprising:
one optical fiber (11);
a support body (12) in which a groove (12a1) for accommodating the optical fiber (11) and another groove (12a3) intersecting the groove (12a1) are formed; and
a resin member (13) for covering, inside the groove (12a1), a boundary between a coating section of the optical fiber (11) and a coating-removed section of the optical fiber (11) and securing the optical fiber (11) to the support body (12),
the resin member (13) being spread inside the another groove (12a3) partway along the groove (12a1), and
the resin member (13) having a refractive index lower than a refractive index of a cladding (11b) of the optical fiber (11).

2. The securing structure (10) according to claim 1, wherein
the another groove (12a3) is formed so as to be, in a plan view of the support body (12), linearly symmetric with respect to the groove (12a1).

3. The securing structure (10) according to claim 1 or 2, wherein
the groove (12a1) is a U-shaped groove.

4. The securing structure (10) according to any one of claims 1 to 3, wherein
a recess (12a4) for regulating a range in which the resin member (13) is spread is formed at a bottom of the groove (12a1).

5. An optical device (23) comprising the securing structure (10) according to any one of claims 1 to 4.

6. A laser apparatus (20) comprising the optical device (23) according to claim 5.

## Patentansprüche

1. Sicherungsstruktur (10), umfassend:
eine optische Faser (11);
einen Trägerkörper (12), in welchem eine Nut (12a1) zum Aufnehmen der optischen Faser (11) und eine weitere Nut (12a3), welche die Nut (12a1) schneidet, gebildet sind; und
ein Harzelement (13) zum Abdecken, innerhalb der Nut (12a1), einer Grenze zwischen einem beschichteten Abschnitt der optischen Faser (11) und einem Abschnitt mit entfernter Beschichtung der optischen Faser (11) sowie zum Sichern der optischen Faser (11) an dem Trägerkörper (12),
wobei das Harzelement (13) innerhalb der weiteren Nut (12a3) teilweise entlang der Nut (12a1) ausgebreitet ist und
das Harzelement (13) einen Brechungsindex aufweist, welcher niedriger ist als ein Brechungsindex eines Mantels (11b) der optischen Faser (11).

2. Sicherungsstruktur (10) nach Anspruch 1, wobei
die weitere Nut (12a3) derart gebildet ist, dass sie in einer Draufsicht auf den Trägerkörper (12) linear symmetrisch in Bezug auf die Nut (12a1) ist.

3. Sicherungsstruktur (10) nach Anspruch 1 oder 2, wobei
die Nut (12a1) eine U-förmige Nut ist.

4. Sicherungsstruktur (10) nach einem der Ansprüche 1 bis 3, wobei
eine Vertiefung (12a4) zum Regulieren eines Bereichs, in welchem das Harzelement (13) ausgebreitet ist, an dem Boden der Nut (12a1) gebildet ist.

5. Optische Vorrichtung (23), umfassend die Sicherungsstruktur (10) nach einem der Ansprüche 1 bis 4.

6. Laservorrichtung (20), umfassend die optische Vorrichtung (23) nach Anspruch 5.

## Revendications

1. Structure de fixation (10) comprenant :
une fibre optique (11) ;
un corps de support (12) dans lequel une rainure (12a1) pour loger la fibre optique (11) et une autre rainure (12a3) entrecoupant la rainure (12a1) sont formées ; et
un organe de résine (13) pour recouvrir, à l'intérieur de la rainure (12a1), une limite entre une section de revêtement de la fibre optique (11) et une section à revêtement retiré de la fibre optique (11) et fixer la fibre optique (11) au corps de support (12),
l'organe de résine (13) étant étalé à l'intérieur de l'autre rainure (12a3) partiellement le long de la rainure (12a1), et
l'organe de résine (13) ayant un indice de réfraction inférieur à un indice de réfraction d'un gainage (11b) de la fibre optique (11).

2. Structure de fixation (10) selon la revendication 1, dans laquelle
l'autre rainure (12a3) est formée de manière à être, sur une vue en plan du corps de support (12), linéairement symétrique par rapport à la rainure (12a1).

3. Structure de fixation (10) selon la revendication 1 ou 2, dans laquelle
la rainure (12a1) est une rainure en forme de U.

4. Structure de fixation (10) selon l'une quelconque des revendications 1 à 3, dans laquelle
un évidement (12a4) pour réguler une plage dans laquelle est étalé l'organe de résine (13) est formé au niveau d'un fond de la rainure (12a1).

5. Dispositif optique (23) comprenant la structure de fixation (10) selon l'une quelconque des revendications 1 à 4.

6. Appareil laser (20) comprenant le dispositif optique (23) selon la revendication 5.
